# EUROPEAN PATENT SPECIFICATION

(11) **EP 2 197 221 B1**
(45) Date of publication and mention of the grant of the patent: **11.02.2015**
(21) Application number: 07855836.8
(22) Date of filing: 27.12.2007
(51) Int. Cl.: H04W 16/30

(54) **AN APPARATUS FOR REALIZING DISTRIBUTED WIRELESS CELL AND COMMUNICATION METHOD THEREOF**
VORRICHTUNG ZUR REALISIERUNG EINER VERTEILTEN DRAHTLOSEN ZELLE UND KOMMUNIKATIONSVERFAHREN DAFÜR
APPAREIL POUR RÉALISER UNE CELLULE SANS FIL DISTRIBUÉE ET SON PROCÉDÉ DE COMMUNICATION

(30) Priority: 21.09.2007 CN 200710122193
(43) Date of publication of application: 16.06.2010
(73) Proprietor: ZTE Corporation, Shenzhen, Guangdong 518057 (CN)
(72) Inventor: GUO, Feng, Guangdong 518057 (CN); WANG, Jianli, Guangdong 518057 (CN); WANG, Wei, Guangdong 518057 (CN)
(74) Representative: Bokinge, Ole
(86) International application number: PCT/CN2007/003835
(87) International publication number: WO 2009/036636

(56) References cited:
- EP-A1- 0 578 076
- CN-A- 1 778 137
- CN-A- 1 929 672
- GB-A- 2 308 043
- JP-A- 2002 335 556
- US-A1- 2005 181 812
- US-A1- 2007 015 514

## Description

### Technical Field

The present invention primarily relates to the field of mobile communication, and more particularly, to an apparatus for building a distributed wireless cell and a communication method for the distributed wireless cell, as described in the preamble of the independent claims.

### Background of the Related Art

In the new generation communication device manufacturing field, a remote radio system gradually attracts attention. In its typical architecture, a base transceiver station (BTS) is divided into two parts: a baseband unit (BBU) and a remote radio unit (RRU).

The RRU and the BBU is connected remotely by optical fibers after installed separately in order to provide foundation for distributed network coverage. For example, in some specific situations, the same carrier is transmitted by a plurality of different RRUs to form distributed network coverage.

For economically developed areas along high-speed railways, the existing network coverage has been very perfect and seamless coverage is already realized. However, the existing network coverage is basically a cell network coverage area distributed with a radius of 0.5 kilometer along high-speed railways. A mobile user, who is in a high-speed train with a speed up to 250 km/h, stays in an area covered by a cell for a very short time due to its fast mobility characteristic. For example, under the speed of 250 km/h, the time for a mobile user to stay in an area covered by a cell with a length of 700m is only 10s. In this case, a mobile terminal usually does not have enough time to make neighbor cell measurement and handover or is barely enough to find a cell with stronger signals to perform handover operation, while the train is leaving the cell quickly due to its fast mobility characteristic. Thus, the cell with stronger signals will not be an optimal cell any more for the mobile terminal such that the mobile terminal in the high-speed train makes frequently measurement and handover of neighbor cells, thereby influencing greatly the conversation quality of the mobile user.

At present, the existing technique resolves problems of an area covered by a cell being too small and the time for a mobile terminal to stay in a single cell being too short, by laying a dedicated network along high-speed railways. However, the technique has the following disadvantages:
Firstly, in the process of laying the dedicated network, antennas are required to be mounted higher to increase a radius of a cell network coverage area. However, mounting the antennas higher will result in two unfavorable consequences. One of them is that a user who is not in the high-speed train can switch easily to the dedicated network, causing the occupancy of the dedicated network resources. The other is that once the user who is not in the high-speed train enters the dedicated network, it is difficult for him to switch from the dedicated network, because in network planning the dedicated network generally is required to break off its adjacency relationship with the existing large mobile communication network to reduce handovers with the large network.
Secondly, as the radius of the cell network coverage area is increased, strength of signals in an edge zone of the cell network coverage area will certainly be decreased. Because of the stronger shielding effect of the high-speed train, signal attenuation loss of the Bombardier high-speed train may be up to 24dB. Thus, when the high-speed train enters the edge zone of the cell network coverage area, it is possible that the mobile terminal in the high-speed train cannot communicate normally.

In view of all the above, the cell network coverage mode based on the prior art has been incapable of satisfying mobile communication requirements for high-speed railways.

The features of the preamble of the independent claims are known from EP 0578076 A1. Relevant technologies are also known from US 2007/0015514 A1.

### Summary of the Invention

A technical problem to be solved by the present invention is to provide a method and apparatus for building a distributed wireless cell in order to resolve the problem of the coverage mode of the cell network of the prior art being incapable of satisfying mobile communication requirements for high-speed railways.

The features of the method and apparatus according to the present invention are defined in the independent claims, and the preferable features according to the present invention are defined in the dependent claims.

In order to solve the technical problems described above, the present invention provides a communication method for a distributed wireless cell comprising:
A. receiving, by a plurality of remote radio units operating in a same cell, an upstream signaling sent by a mobile terminal and forwarding the upstream signaling to a baseband unit;
B. receiving, by the baseband unit, the upstream signaling, analyzing and synthesizing the upstream signaling such that the synthesized signaling corresponds completely to the upstream signaling sent by the mobile terminal, and then transmitting the synthesized upstream signaling to a base station controller;
C. receiving and analyzing, by the base station controller, the upstream signaling and transmitting a downstream signaling to the baseband unit; and
D. receiving, by the baseband unit, the downstream signaling, analyzing the downstream signaling, and then distributing the analyzed downstream signaling to the plurality of remote radio units; the plurality of remote radio units forwarding the downstream signaling to the mobile terminal, wherein the plurality of remote radio units are connected in a cascading manner to form a chain network coverage area.

Further, each of the plurality of remote radio units transmits a signal with a same carrier, each remote radio unit using a common broadcast control channel, common control channel and traffic channel.

Further, a coverage area of the cell overlaps partially with a coverage area of a neighbor wireless cell.

In order to resolve the problem described above, the present invention further provides an apparatus for building a distributed wireless cell, the apparatus comprising a base station controller, a baseband unit and a plurality of remote radio units, the base station controller configured to receive and analyze an upstream signaling sent by the baseband unit and transmit a downstream signaling to the baseband unit;
the baseband unit configured to receive the upstream signaling forwarded by the plurality of remote radio units, analyze all of the upstream signaling and synthesize all of the upstream signaling such that the synthesized signaling corresponds completely to the upstream signaling sent by the mobile terminal, transmit the synthesized upstream signaling to the base station controller; receive the downstream signaling sent by the base station controller, analyze the downstream signaling and then distribute the analyzed downstream signaling to the plurality of remote radio units; and
the plurality of remote radio units configured to operate in the same physical cell and be connected in a cascading manner to form a chain network coverage area, the plurality of remote radio units configured to receive the upstream signaling sent by a mobile terminal, forward the upstream signaling to the baseband unit respectively and receive the downstream signaling sent by the baseband unit to transmit the downstream signaling to the mobile terminal.

Further, the remote radio units are a plurality of remote radio units operating in the same cell.

Further, the plurality of remote radio units are connected in a cascading manner to form a chain network coverage area.

Further, each of the plurality of remote radio units transmits a signal with the same carrier, each remote radio unit using a common broadcast control channel, common control channel and traffic channel.

Further, a coverage area of the cell overlaps partially with that of a neighbor wireless cell.

Using the method and apparatus for building a distributed wireless cell in accordance with the present invention, a long and narrow cell network coverage area is formed by connecting a plurality of remote radio units operating in the same cell in a cascading manner, where each remote radio unit has a common broadcast control channel (BCCH), common control channel (CCCH) and traffic channel (TCH) such that a mobile terminal in a high-speed train interacts with a different remote radio unit in the same cell at a different time so as to prolong the time for the mobile terminal to stay in a cell, thereby improving the quality of conversation of a mobile user.

In addition, the present invention allows coverage areas of two neighbor cells to overlap partially in order to satisfy configuration requirements for the neighbor cells and ensures effectively the network measurement and handover of the mobile terminal in the high-speed train between the two neighbor cells, thereby satisfying completely mobile communication requirements for high-speed railways.

### Brief Description of the Drawings

FIG. 1 is a schematic diagram of a coverage area of a distributed wireless cell in accordance with an embodiment of the present invention;
FIG. 2 is a block diagram of an apparatus for implementing a distributed wireless cell in accordance with an embodiment of the present invention; and
FIG. 3 is a flow chart of a method for implementing a distributed wireless cell in accordance with an embodiment of the present invention.

### Preferred Embodiments of the Invention

The present invention will be described in detail below in conjunction with the accompanying drawings and specific embodiments.

A baseband unit (BBU) may be connected to a plurality of remote radio units (RRUs), which are connected to each other in a cascade manner, by one optical fiber. Because each remote radio unit (RRU) covers a certain network coverage area, the plurality of cascaded remote radio unit (RRU) form a chain network coverage area along railways while supporting the same cell.

As to the mounting of a remote radio unit (RRU), a coverage antenna of each remote radio unit (RRU) does not need to be mounted very high, the antenna height of around 5m is reasonable such that network coverage is only for a mobile user in a high-speed train to further ensure that there are stronger signals in a network coverage area and the stronger signal can be shielded successfully by carriage. Furthermore, a mounting inclination angle of the coverage antenna should be small and each coverage antenna covers a railway of about several hundred meters such that the network coverage remains within the certain range to prevent a user out of a high-speed train from entering an cell coverage area supported by remote radio units (RRU) and snatching wireless resources with the user in the high-speed train.

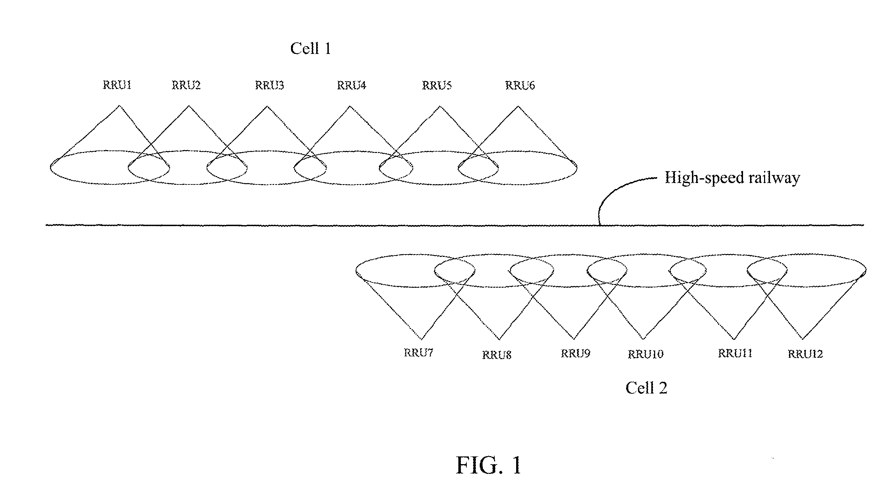

FIG. 1 is a schematic diagram of a coverage area of a distributed wireless cell in accordance with an embodiment of the present invention. In this embodiment, 6 remote radio units (RRU) are connected in a cascaded manner to form a cell network coverage area, each remote radio unit (RRU) having a set of separate wireless configuration, which is logically a cell with two carrier frequencies. Each of the remote radio units (RRU) has a common BCCH, CCCH and TCH to form a long and narrow coverage area along railways. For a coverage area with a radius of 500m covered by one RRU, 6 RRUs form a cell network coverage area with a length of 6km. Within the range of 6km, if the time for a high-speed train running at 250 km/h to traverse the cell reaches 86s, then a mobile terminal in the high-speed train can be always within a cell coverage area with sufficiently strong signals during running, thereby ensuring conversation effect with high quality.

Each of the 6 cascaded remote radio units (RRU) in FIG. 1 transmits a signal with the same carrier, and its transmission effect corresponds to transmission effect of downstream multichannel transmission diversity. Although the mobile terminal moving within the range of 6km will traverse areas covered by different RRUs, the time for the mobile terminal to stay in a cell in the course of rapid moving is prolonged greatly, because each remote radio unit (RRU) operates in the same cell. Moreover, because an antenna is mounted in proper height for each remote radio unit (RRU), its coverage area is not very large, but all signals within the coverage area are sufficiently strong so as to ensure the sufficient strength of upstream and downstream signals between the mobile terminal and a base station even though there exists carriage shielding effect.

In addition, for measurement and handover of the mobile terminal between two neighbor cells, the present invention allows the two neighbor cells to overlap partially to satisfy configuration requirements for the neighbor cells in order to effectively ensure network measurement and handover of the mobile terminal in the high-speed train between two neighbor cells.

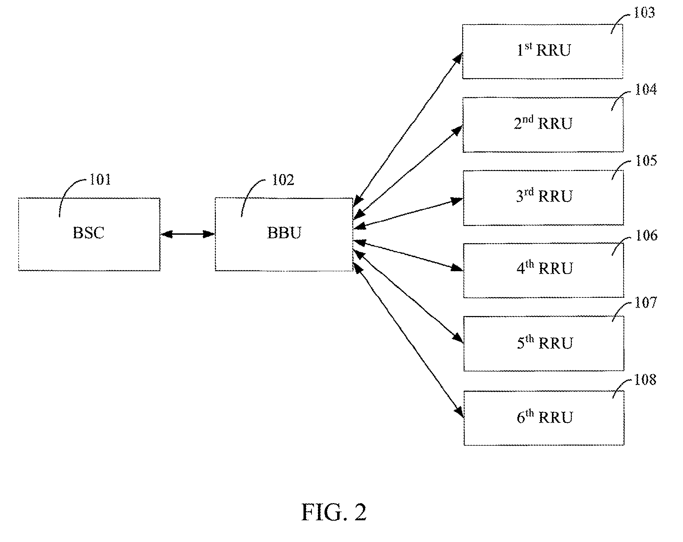

FIG. 2 is a block diagram of an apparatus for implementing a distributed wireless cell in accordance with an embodiment of the present invention. The apparatus comprising:
a base station controller 101 configured to receive and analyze an upstream signaling sent by a baseband unit 102 and transmit a downstream signaling to the baseband unit 102;
the baseband unit 102 configured to receive the upstream signaling forwarded by remote radio units 103-108, analyze and synthesize the upstream signaling, and then transmit the upstream signaling to the base station controller via an Abis port; also configured to receive the downstream signaling sent by the base station controller, analyze and then transmit the downstream signaling to a plurality of remote radio units; and
the first remote radio unit 103, the second remote radio unit 104, the third remote radio unit 105, the forth remote radio unit 106, the fifth remote radio unit 107 and the sixth remote radio unit 108 configured to receive the upstream signaling sent by a mobile terminal, and then forward the upstream signaling to the baseband unit respectively; and also configured to receive and then transmit the downstream signaling sent by the baseband unit to a mobile terminal which is within an network coverage area of remote radio units 103-108.

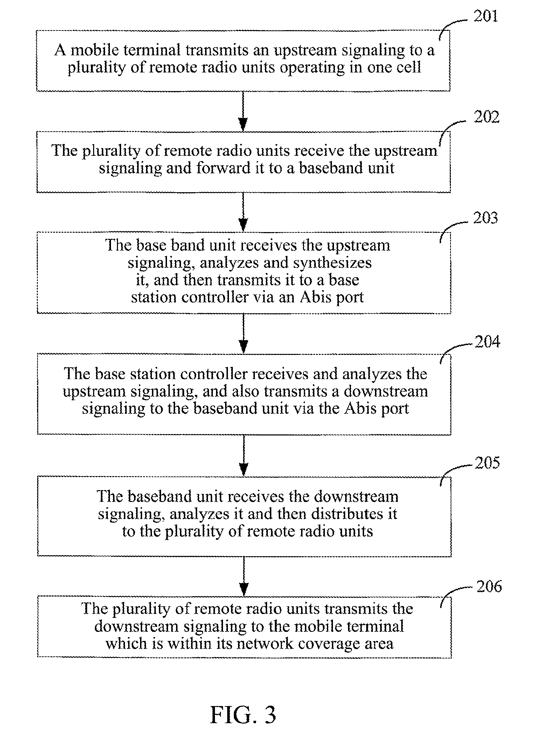

FIG. 3 is a flow chart of a method for implementing a distributed wireless cell in accordance with an embodiment of the present invention. The specific implementation steps will be described below.

Step 201: a mobile terminal transmits an upstream signaling to a plurality of remote radio units (RRUs) operating in one cell.

Step 202: the plurality of remote radio units (RRU) receive the upstream signaling and then forward it to a baseband unit (BBU).

Step 203: the base band unit (BBU) receives the upstream signaling, analyzes and synthesizes it, and then transmits it to a base station controller (BSC) via an Abis port.

Steps 201-203 are an upstream link communication process between the mobile terminal, the remote radio units (RRU), the baseband unit (BBU) and the base station controller (BSC). In this process, as the high-speed train moves continuously, the mobile terminal in the high-speed train having entered a cell carries out signaling interaction with the plurality of remote radio units (RRU) operating in the same cell in accordance to the order in which the mobile terminal enters the cell. The baseband unit (BBU) synthesizes the upstream signaling received by the plurality of remote radio units such that the synthesized signaling corresponds completely to the upstream signaling sent by the mobile terminal.

Step 204: the base station controller (BSC) receives and analyzes the upstream signaling and transmits a downstream signaling to the baseband unit (BBU) via the Abis port.

Step 205: the baseband unit (BBU) receives the downstream signaling, analyzes and then transmits it to the plurality of remote radio units (RRU).

Step 206: the plurality of remote radio units (RRU) transmits the downstream signaling to the mobile terminal which is within its network coverage area.

Steps 204-206 are a downstream link communication process between the mobile terminal, the remote radio units (RRU), the baseband unit (BBU) and the base station controller (BSC). In this process, the baseband unit (BBU) receives a downstream signaling sent by the base station controller (BSC), processes it and then transmits the processed downstream signaling to the plurality of remote radio units (RRU) operating in the cell such that each of the remote radio units (RRU) operating in the cell transmits the downstream signaling. Thus, although the mobile terminal having entered a cell interacts with different remote radio units (RRU) at different time as the high-speed train moves continuously, the mobile terminal is able to implement completely signaling interaction with the plurality of remote radio units (RRU) operating in the cell in the situation of high-speed moving since each of remote radio unit (RRU) transmits the same downstream signaling, thereby ensuring normal network connection of the mobile terminal in the cell.

According to the present invention, in the course of conversation of the mobile terminal, as the high-speed train moves continuously, the mobile terminal will interact with the plurality of remote radio units (RRU) operating in the same cell. Once each remote radio unit (RRU) interacts with the mobile terminal, the remote radio unit (RRU) will accordingly occupy a traffic channel (TCH). The baseband unit (BBU) will measure the traffic channel (TCH) of each RRU and measure, select and process synthetically data from different sources to form one channel of best voice, thereby ensuring conversation effect with high quality.

Of course, many other embodiments in accordance with the present invention may be used. For example, the number of remote radio units (RRU) is not limited to 6 and may be increased or decreased according to practical requirements. The height and angle of an antenna of a remote radio unit (RRU) may be adjusted accordingly depending on practical requirements. A variety of corresponding modifications and variations, which should be within the protection scope defined by attached claims of the present invention, may be made by those skilled in the art.

### Industrial Applicability

The present invention provides a method and apparatus for implementing a distributed wireless cell such that a mobile terminal in a high-speed train interacts with different remote radio units in the same cell at different times in order to prolong the time for the mobile terminal to stay in the cell, thereby improving the conversation quality of a mobile user. In addition, the present invention ensures effectively the network measurement and handover of the mobile terminal in the high-speed train between two neighbor cells to satisfy mobile communication requirements for high-speed railways.

## Claims

1. A communication method for a distributed wireless cell, **characterized by** the method comprising:
A. receiving, by a plurality of remote radio units operating in a same cell, an upstream signaling sent by a mobile terminal and forwarding the upstream signaling to a baseband unit (202);
B. receiving, by the baseband unit, the upstream signaling, analyzing all of the upstream signaling, and synthesizing all of the upstream signaling such that the synthesized signaling corresponds completely to the upstream signaling sent by the mobile terminal, and then transmitting the synthesized upstream signaling to a base station controller (203);
C. receiving and analyzing, by the base station controller, the upstream signaling and transmitting a downstream signaling to the baseband unit (204); and
D. receiving, by the baseband unit, the downstream signaling, analyzing the downstream signaling, and then distributing the analyzed downstream signaling to the plurality of remote radio units (205); the plurality of remote radio units forwarding the downstream signaling to the mobile terminal (206);
wherein the plurality of remote radio units are connected in a cascading manner to form a chain network coverage area.

2. The method according to claim 1, wherein each of the plurality of remote radio units transmits a signal with a same carrier, each remote radio unit using a common broadcast control channel, common control channel and traffic channel.

3. The method according to claim 1, wherein a coverage area of the cell overlaps partially with that of a neighbor wireless cell.

4. An apparatus for building a distributed wireless cell, the apparatus comprising a base station controller, a baseband unit, and a plurality of remote radio units, the base station controller (101) configured to receive and analyze an upstream signaling sent by the baseband unit (102) and transmit a downstream signaling to the baseband unit (102);
**characterized by**
the baseband unit (102) configured to receive the upstream signaling forwarded by the plurality of remote radio units (103-108), analyze all of the upstream signaling and synthesize all of the upstream signaling such that the synthesized signaling corresponds completely to the upstream signaling sent by the mobile terminal, and then transmit the synthesized upstream signaling to the base station controller (101); receive the downstream signaling sent by the base station controller (101), analyze the downstream signaling and then distribute the analyzed downstream signaling to the plurality of remote radio units (103-108); and
the plurality of remote radio units (103-108) configured to operate in the same physical cell and be connected in a cascading manner to form a chain network coverage area, the plurality of remote radio units (103-108) configured to receive the upstream signaling sent by a mobile terminal, forward the upstream signaling to the baseband unit (102) respectively and receive the downstream signaling sent by the baseband unit (102) to transmit the downstream signaling to the mobile terminal.

5. The apparatus according to claim 4, wherein each of the plurality of remote radio units (103-108) is configured to transmit a signal with the same carrier, each remote radio unit configured to using a common broadcast control channel, common control channel and traffic channel.

6. The apparatus according to claim 4, wherein a coverage area of the cell overlaps partially with a coverage area of a neighbor wireless cell.

## Patentansprüche

1. Kommunikationsverfahren für eine verteilte drahtlose Zelle, **dadurch gekennzeichnet, dass** das Verfahren Folgendes umfasst:
A. Empfangen einer durch ein mobiles Endgerät gesendeten Aufwärtsstrecken-Signalisierung und Weiterleiten der Aufwärtsstrecken-Signalisierung zu einer Basisbandeinheit (202), durch mehrere entfernte Funkeinheiten, die in derselben Zelle arbeiten;
B. Empfangen der Aufwärtsstrecken-Signalisierung, Analysieren der ganzen Aufwärtsstrecken-Signalisierung und Synthetisieren der ganzen Aufwärtsstrecken-Signalisierung, so dass die synthetisierte Signalisierung vollständig der durch das mobile Endgerät gesendeten Aufwärtsstrecken-Signalisierung entspricht, und dann Übertragen der synthetisierten Aufwärtsstrecken-Signalisierung zu einem Basisstations-Controller (203), durch die Basisbandeinheit;
C. Empfangen und Analysieren der Aufwärtsstrecken-Signalisierung und Übertragen einer Abwärtsstrecken-Signalisierung zu der Basisbandeinheit (204), durch den Basisstations-Controller; und
D. Empfangen der Abwärtsstrecken-Signalisierung, Analysieren der Abwärtsstrecken-Signalisierung und dann Verteilen der analysierten Abwärtsstrecken-Signalisierung an die mehreren entfernten Funkeinheiten (205), durch die Basisbandeinheit; wobei die mehreren entfernten Funkeinheiten die Abwärtsstrecken-Signalisierung zu dem mobilen Endgerät weiterleiten (206) ;
wobei die mehreren entfernten Funkeinheiten auf eine Kaskadenweise verbunden sind, um einen Kettennetz-Versorgungsbereich zu bilden.

2. Verfahren nach Anspruch 1, wobei jede der mehreren entfernten Funkeinheiten ein Signal mit demselben Träger überträgt, wobei jede entfernte Funkeinheit einen gemeinsamen Rundsende-Steuerkanal, einen gemeinsamen Steuerkanal und einen Verkehrskanal verwendet.

3. Verfahren nach Anspruch 1, wobei ein Versorgungsbereich der Zelle teilweise mit dem einer drahtlosen Nachbarzelle überlappt.

4. Vorrichtung zum Aufbauen einer verteilten drahtlosen Zelle, wobei die Vorrichtung einen Basisstations-Controller, eine Basisbandeinheit und mehrere entfernte Funkeinheiten umfasst, wobei der Basisstations-Controller (101) dafür ausgelegt ist, eine durch die Basisbandeinheit (102) gesendete Aufwärtsstrecken-Signalisierung zu empfangen und zu analysieren und eine Abwärtsstrecken-Signalisierung zu der Basisbandeinheit (102) zu übertragen;
**gekennzeichnet durch**
die Basisbandeinheit (102), die dafür ausgelegt ist, die **durch** die mehreren entfernten Funkeinheiten (103-108) weitergeleitete Aufwärtsstrecken-Signalisierung zu empfangen, die ganze Aufwärtsstrecken-Signalisierung zu analysieren und die ganze Aufwärtsstrecken-Signalisierung zu synthetisieren, so dass die synthetisierte Signalisierung vollständig der **durch** das mobile Endgerät gesendeten Aufwärtsstrecken-Signalisierung entspricht, und dann die synthetisierte Aufwärtsstrecken-Signalisierung an den Basisstations-Controller (101) zu übertragen; die **durch** den Basisstations-Controller (101) gesendete Abwärtsstrecken-Signalisierung zu empfangen, die Abwärtsstrecken-Signalisierung zu analysieren und dann die analysierte Abwärtsstrecken-Signalisierung an die mehreren entfernten Funkeinheiten (103-108) zu verteilen; und
die mehreren entfernten Funkeinheiten (103-108), die dafür ausgelegt sind, in derselben physikalischen Zelle zu arbeiten und auf eine Kaskadenweise verbunden zu sein, um einen Kettennetz-Versorgungsbereich zu bilden, wobei die mehreren entfernten Funkeinheiten (103-108) dafür ausgelegt sind, die **durch** ein mobiles Endgerät gesendete Aufwärtsstrecken-Signalisierung zu empfangen, die Aufwärtsstrecken-Signalisierung jeweils zu der Basisbandeinheit (102) weiterzuleiten und die durch die Basisbandeinheit (102) gesendete Abwärtsstrecken-Signalisierung zu empfangen, um die Abwärtsstrecken-Signalisierung zu dem mobilen Endgerät zu übertragen.

5. Vorrichtung nach Anspruch 4, wobei jede der mehreren entfernten Funkeinheiten (103-108) dafür ausgelegt ist, ein Signal mit denselben Träger zu übertragen, wobei jede entfernte Funkeinheit dafür ausgelegt ist, einen gemeinsamen Rundsende-Steuerkanal, einen gemeinsamen Steuerkanal und einen Verkehrskanal zu verwenden.

6. Vorrichtung nach Anspruch 4, wobei sich der Versorgungsbereich der Zelle teilweise mit einem Versorgungsbereich einer drahtlosen Nachbarzelle überlappt.

## Revendications

1. Procédé de communication destiné à une cellule sans fil distribuée, **caractérisé en ce que** le procédé comprend :
A. la réception, par une pluralité d'unités radio distantes fonctionnant dans une même cellule, d'une signalisation de liaison montante envoyée par un terminal mobile et le réacheminement de la signalisation de liaison montante vers une unité de bande de base (202) ;
B. la réception, par l'unité de bande de base, de la signalisation de liaison montante, l'analyse de la totalité de signalisation de liaison montante, et la synthèse de la totalité de la signalisation de liaison montante de manière à ce que la signalisation synthétisée corresponde entièrement à la signalisation de liaison montante envoyée par le terminal mobile, puis la transmission de la signalisation de liaison montante synthétisée à une unité de commande de station de base (203) ;
C. la réception et l'analyse, par l'unité de commande de station de base, de la signalisation de liaison montante et la transmission d'une signalisation de liaison descendante à l'unité de bande de base (204) ; et
D. la réception, par l'unité de bande de base, de la signalisation de liaison descendante, l'analyse de la signalisation de liaison descendante, puis la distribution de la signalisation de liaison descendante analysée à la pluralité d'unités radio distantes (205) ; la pluralité d'unités radio distantes réacheminant la signalisation de liaison descendante vers le terminal mobile (206) ;
dans lequel la pluralité d'unités radio distantes sont connectées en cascade afin de former une zone de couverture de réseau chaînée.

2. Procédé selon la revendication 1, dans lequel chacune de la pluralité d'unités radio distantes transmet un signal sur une même porteuse, chaque unité radio distante utilisant un canal de commande de diffusion commun, un canal de commande commun et un canal de trafic.

3. Procédé selon la revendication 1, dans lequel une zone de couverture de la cellule chevauche partiellement celle d'une cellule sans fil voisine.

4. Appareil destiné à construire une cellule sans fil distribuée, l'appareil comprenant une unité de commande de station de base, une unité de bande de base et une pluralité d'unités radio distantes, l'unité de commande de station de base (101) étant configurée pour recevoir et analyser une signalisation de liaison montante envoyée par l'unité de bande de base (102) et transmettre une signalisation de liaison descendante à l'unité de bande de base (102) ;
**caractérisé en ce que** l'unité de bande de base (102) est configurée pour recevoir la signalisation de liaison montante réacheminée par la pluralité d'unités radio distantes (103-108), analyser la totalité de la signalisation de liaison montante et synthétiser la totalité de la signalisation de liaison montante de manière à ce que la signalisation synthétisée corresponde entièrement à la signalisation de liaison montante envoyée par le terminal mobile, puis transmettre la signalisation de liaison montante synthétisée à l'unité de commande de station de base (101) ; recevoir la signalisation de liaison descendante envoyée par l'unité de commande de station de base (101), analyser la signalisation de liaison descendante puis distribuer la signalisation de liaison descendante analysée à la pluralité d'unités radio distantes (103-108) ; et
la pluralité d'unités radio distantes (103-108) sont configurées pour fonctionner dans la même cellule physique et être connectées en cascade afin de former une zone de couverture de réseau chaînée, la pluralité d'unités radio distantes (103-108) étant configurées pour recevoir la signalisation de liaison montante envoyée par un terminal mobile, réacheminer respectivement la signalisation de liaison montante vers l'unité de bande de base (102) et recevoir la signalisation de liaison descendante envoyée par l'unité de bande de base (102) afin de transmettre la signalisation de liaison descendante au terminal mobile.

5. Appareil selon la revendication 4, dans lequel chacune de la pluralité d'unités radio distantes (103-108) est configurée pour transmettre un signal ayant la même porteuse, chaque unité radio distante étant configurée pour utiliser un canal de commande de diffusion commun, un canal de commande commun et un canal de trafic.

6. Appareil selon la revendication 4, dans lequel une zone de couverture de la cellule chevauche partiellement celle d'une cellule sans fil voisine.
